(19) Europäisches Patentamt

European Patent Office

Office européen des brevets

(11) Veröffentlichungsnummer: **0 464 972 A2**

# EUROPÄISCHE PATENTANMELDUNG

(21) Anmeldenummer: **91250156.6**

(51) Int. Cl.5: **H02B 1/30**

(22) Anmeldetag: **12.06.91**

(30) Priorität: **06.07.90 DE 4021773**

(43) Veröffentlichungstag der Anmeldung:
**08.01.92 Patentblatt 92/02**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Blum, Richard**
**Pestalozzistrasse 16**
**W-6057 Dietzenbach(DE)**
Erfinder: **Groh, Hans-Michael**
**Erfurterstrasse 11**
**W-6452 Hainburg 2(DE)**
Erfinder: **Küster, Willi**
**Blümchesgrund 3**
**W-6460 Gelnhausen(DE)**
Erfinder: **Schmidt, Ludwig**
**Kohlrauschweg 9**
**W-6000 Frankfurt 90(DE)**

(54) **Schaltschrank mit einem durch Wandelemente und Türen abdeckbaren Gerüst.**

(57) Ein Schaltschrank (16) weist ein durch Wandelemente (3, 17) und Türen abdeckbares Gerüst aus Hohlprofilelementen (1) auf, die an der Innenseite des Schaltschrankes (16) wenigstens einen Steg (4) zur Aufnahme von Befestigungselementen der Wandelemente (3, 17) besitzen. Wenigstens eines der Wandelemente (3) ist mit mehreren Halteklammern (6) versehen, die jeweils mit einem federnden Schenkel (11) in Eingriff mit einer Kante (22) des Steges (4) des Hohlprofilelementes (1) zu bringen sind. Das Wandelement wird hierdurch mit einer Vorspannkraft an dem Gerüst zur Anlage gebracht. Mehrere Halteklammern können durch eine Leiste verbunden sein, die an dem Wandelement zu befestigen ist.

FIG 3

Die Erfindung betrifft einen Schaltschrank mit einem durch Wandelemente und Türen abdeckbaren Gerüst aus Hohlprofilelementen mit wenigstens einem an der Innenseite des Schaltschrankes zugänglichen, Befestigungselemente für die Wandelemente aufnehmenden Steg. Ein Schaltschrank dieser Art ist beispielsweise durch die US-A-3 087 768 bekannt geworden.

Die Befestigung insbesondere obenliegender Wandelemente oder Abdeckplatten ist erschwert, wenn das Gerüst des Schaltschrankes eine relativ große Höhe aufweist und daher Werkzeuge und Befestigungsmittel in Überkopfhöhe zu handhaben sind. Häufig fallen hierbei die anzusetzenden Schrauben oder sonstigen Befestigungsmittel herab und müssen neu angesetzt werden. Bei unachtsamer Arbeitsweise besteht auch die Gefahr, daß herabgefallene Befestigungselemente in den Innenraum der Hohlprofilelemente geraten und später im Betrieb des Schaltschrankes Störungen und Schäden hervorrufen. Aus diesem Grund ist auch eine andere Bauart von Schaltschränken gebräuchlich, bei der die oberen Wandelemente bzw. Abdeckungen von außen an dem Gerüst befestigt werden. Dies erfordert jedoch mit Rücksicht auf die häufig beträchtliche Höhe der Schaltschränke Hilfsmittel wie Leitern, Arbeitsbühnen oder ähnliche Gerätschaften, was gleichfalls die Montage der Schaltschränke erschwert.

Zur Verbindung von Gehäusedeckeln mit einem Gehäuseunterteil, insbesondere für Antennenanschlußgehäuse, ist es bereits bekannt, federnde Halteklammern zu verwenden, die einen Blattfederbügel aufweisen (DE-GM 1 936 059). Dieser ist an seinem einen Ende mittels eines Gelenkstiftes in einem ösenartigen Ausleger des Gehäusedeckels seitwärts schwenkbar gelagert. Der Blattfederbügel reicht bis unter den Boden des Gehäuseunterteiles, an dem für jeden Blattfederbügel eine Rastnut vorgesehen ist. Das zum Eingriff in eine dieser Rastnuten vorgesehene Ende jedes Blattfederbügels ist S-förmig derart gebogen, daß die innere der beiden Biegungen der S-Form in die Rastnut eintreten kann.

Eine Anordnung der vorstehend beschriebenen Art ist leicht zu handhaben und ergibt einen sicheren Zusammenhalt der beiden Gehäuseteile. Die mit Rücksicht auf das Vorhandensein nur weniger Befestigungsstellen und auf eine wiederholte Lösung und erneute Einrastung der Blattfederbügel gewählte Gestaltung bedingt andererseits einen Aufwand, der für Abdeckungen von Schaltschränken nicht tragbar erscheint.

Eine andere Anordnung zur Befestigung von Abdeckungen an Blechgehäusen (DE-GM 72 17 174) ist für solche Gehäuse vorgesehen, an deren Rändern eine ebene Auflagefläche für eine Abdeckung vorhanden ist. Diese Auflagefläche ist durch Abwinklungen des Gehäuses gebildet. An der Abdeckung sind um ein solches Maß aus dem Material der Abdeckung herausgedrückte Laschen vorgesehen, daß die Laschen unter die Abwinklungen des Gehäuses greifen können. Es ist allerdings nicht vorgesehen, die Abdeckungen nach Bedarf von dem Gehäuse abnehmen oder an dieses anfügen zu können. Vielmehr sollen die Seitenwände des Gehäuses mit ihren Abwinklungen unter die Laschen geschoben und dann durch Schrauben befestigt werden. Zur Verwendung für einen Schaltschrank ist diese Anordnung nicht zweckmäßig.

Der Erfindung liegt die Aufgabe zugrunde, die Befestigung von Wandelementen an Schaltschränken wesentlich zu vereinfachen, und zwar insbesondere im Hinblick auf die obenliegenden Wandelemente.

Gemäß der Erfindung wird diese Aufgabe durch folgende Merkmale gelöst:

- wenigstens eines der Wandelemente ist mit mehreren Halteklammern versehen, die jeweils mit einem federnden Schenkel in Eingriff mit einer Kante des Steges des Hohlprofilelementes unter Aufbringung einer das Wandelement gegen das Hohlprofilelement vorspannenden Kraft bringbar sind,
- die Halteklammer besitzt einen zur Verbindung mit einem Wandelement vorgesehenen Befestigungsschenkel und einen winklig von diesem abragenden und mit einer Rastnase versehenen Rastschenkel,
- der Rastschenkel ist mit einer Öffnung für den Angriff eines Werkzeuges versehen.

Eine wesentliche Eigenschaft des neuen Schaltschrankes besteht darin, daß die gesonderte Handhabung zunächst loser Befestigungselemente entfällt. Die federnde Eigenschaft der Halteklammern gestattet es ferner, die gewünschte Verbindung lediglich durch vorübergehende Aufbringung einer Kraft herzustellen, was aufgrund der Öffnungen in den Rastschenkeln besonders einfach durchführbar ist. Zugleich wird damit der Vorteil erzielt, daß das in dieser Weise befestigte Wandelement unter dem Einfluß eines im Inneren des Schaltschrankes entstehenden Überdruckes zur Entlastung von seiner Auflagefläche abhebbar ist. Die Halteklammern erfüllen daher zugleich die Funktion einer Druckentlastung, beispielsweise beim Auftreten eines Störlichtbogens im Inneren des Schaltschrankes.

Die Halteklammer hat somit im wesentlichen die Gestalt eines federnden Winkelstückes, und ist dementsprechend einfach herstellbar und an dem Wandelement auf geeignete Weise, beispielsweise durch Punktschweißung, zu befestigen.

Zwischen dem Befestigungsschenkel und dem Rastschenkel kann unter Bildung einer Biegezone ein Mittelstück angeordnet sein. Diese Ausführung der Halteklammer eignet sich insbesondere für solche Anwendungen, bei denen erhöhte Anforderungen an den Ausgleich von Maßtoleranzen und zugleich an die Nachgiebigkeit gegenüber einem inneren Überdruck gestellt werden.

Die erwähnte Biegezone kann als kreisbogenförmiger Abschnitt mit einem gegenüber dem Abstand des Befestigungsschenkels von dem Mittelstück größeren Durchmesser ausgebildet sein. Die Abmessungen der Halteklammer werden infolgedessen nur geringfügig vergrößert.

Der erwähnte Rastschenkel kann im Querschnitt U-förmig gestaltet und über die Kante des Steges des Hohlprofilelementes überstehend bemessen sein, wobei zwei Rastnasen durch Einschnitte der Randschenkel des Rastschenkels gebildet sind. Diese Gestaltung gestattet es, die Halteklammer aus einem ebenen Blechstreifen als preiswertes Stanz-Biegeteil herzustellen.

Die beschriebenen Halteklammern sind im Prinzip in Verbindung mit allen Profilelementen eines Schaltschrankgerüstes verwendbar, die einen nach innen vorstehenden Steg aufweisen. Besonders geeignet sind in diesem Zusammenhang zur Innenseite des Schaltschrankes offene Hohlprofilelemente deren einer Endsteg zugleich zur Befestigung von Einbauteilen benutzt werden kann. Hierbei können die Rastnasen um die Kante des Endsteges herumgreifen und in den Innenraum des Hohlprofils derart hineinragen, daß der Befestigungsschenkel der Halteklammer im wesentlichen flach an dem Hohlprofil anliegt. Für die Befestigung des Wandelementes besteht somit kein nennenswerter Raumbedarf. Ferner können Öffnungen in einem dem Endsteg gegenüberliegenden Profilteil als Widerlager bei der Handhabung der erwähnten Werkzeuge mit Hebelwirkung benutzt werden.

Die beschriebenen Halteklammern können nicht nur als Einzelteile, sondern auch in Gestalt einer Leiste benutzt werden, die wenigstens zwei Halteklammern verbindet. Eine solche Leiste kann im Profil winkelförmig gestaltet sein, wobei die Halteklammern durch Einschnitte aus dem einen Schenkel der Leiste gebildet sind. Die Leiste hat nicht nur die Funktion, die Halteklammern zusammenzufassen, sondern kann zugleich als Abdichtung von Spalten gegen das Hindurchtreten einer elektromagnetischen Strahlung dienen. Für diese Funktion ist es günstig, wenn an dem Schenkel der Leiste, der parallel zu dem Wandelement angeordnet ist, Öffnungen zur Befestigung an dem Wandelement und ferner an dem Rand dieses Schenkels eine stumpfwinklige Abkantung vorgesehen ist. Die Abkantung legt sich federnd gegen das Wandelement und verdeckt auf diese Weise Spalte, die zwischen dem Gerüst des Schaltschrankes und dem aufliegenden Wandelement vorhanden sind.

Die Erfindung wird im folgenden anhand der in den Figuren dargestellten Ausführungsbeispiele näher erläutert.

Die Figur 1 zeigt eine Halteklammer für ein Wandelement in Verbindung mit einem Hohlprofilelement im Schnitt, während in der Figur 2 eine Ansicht eines Rastschenkels der Halteklammer gemäß der Figur 1 dargestellt ist.

Die Figur 3 zeigt eine schematische perspektivische Darstellung einer Ecke des Gerüstes eines Schaltschrankes zur Veranschaulichung der Befestigung eines obenliegenden Wandelementes.

In der Figur 4 ist perspektivisch eine Leiste mit zwei Halteklammern gezeigt.

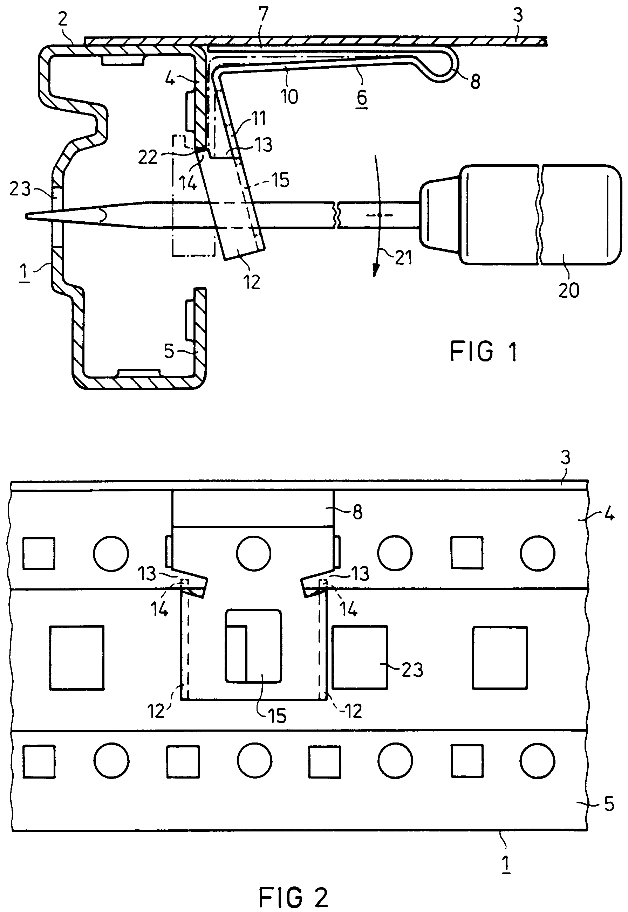

In der Figur 1 ist im Schnitt ein Hohlprofilelement 1 gezeigt, das eine im wesentlichen C-förmige Kontur aufweist, wobei die Öffnung dieser C-Kontur zum Inneren des Schaltschrankes weist. Auf einer oberen Teilfläche 2 liegt ein Dachblech 3 als oberes Wandelement auf. Rechtwinklig zur Ebene des Dachbleches 3 stehen ein oberer Endsteg 4 sowie ein unterer Endsteg 5, welche die Öffnung des C-Profils begrenzen. Der obere Steg 4 dient als Widerlager einer federnden Halteklammer 6, die im folgenden näher erläutert wird.

Die Halteklammer 6 besitzt einen oberen Befestigungsschenkel 7, an den sich unter Einfügung einer Biegezone 8 ein Mittelstück 10 anschließt. Von diesem ragt winklig ein Rastschenkel 11 ab, der an seinem unteren Ende ein U-förmiges Profil aufweist. In beiden Randschenkeln 12 des Rastschenkels 11 ist je ein Einschnitt bzw. eine Ausnehmung 13 vorgesehen, wodurch Rastnasen 14 gebildet sind. Ferner ist der Rastschenkel 11 mit einer Öffnung 15 zum Angriff eines Werkzeuges versehen, wie noch erläutert wird.

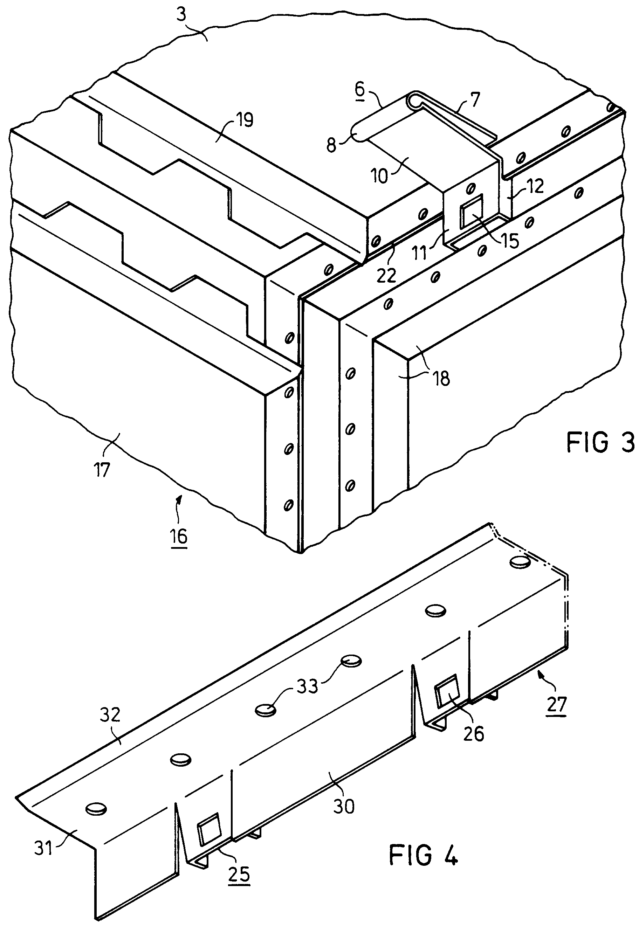

Die Wirkungsweise der beschriebenen Halteklammern ist am besten anhand der Figur 3 in Verbindung mit der Figur 1 ersichtlich. In der Figur 3 ist eine perspektivische Ansicht einer oberen Ecke einer Schaltschrankes 16 dargestellt. Zwei etwa C-förmige Profilstücke 18 sind rechtwinklig zusammengesetzt und bilden einen ebenen Rahmen, der durch ein weiteres Profilstück 19 mit einseitig abgeschrägtem und offenem Vierkantprofil zu einem räumlichen Gerüst ergänzt ist. Nach außen ist dieses Gerüst durch Wandelemente abgedeckt. Eine Abdeckung 17 als seitliches Wandelement sowie ein Dachblech 3 als oberes Wandelement sind in der Figur 3 gezeigt. Das Dachblech 3 ist mittels mehrerer Halteklammern 6 an dem Gerüst befestigt. Eine der Halteklammern 6 ist in der Figur 3 sichtbar. Der Befestigungsschenkel 7 ist an dem Dachblech 3 in geeigneter Weise, z. B. durch Punktschweißung befestigt. Der Randschenkel 12 des Rastschenkels 11 greift mit seiner in der Figur 3 nicht sichtbaren Rastnase 14 (Figur 1) unter die Kante 22 des oberen Profilelementes 18. Eine elastische Spreizung zwischen dem Befestigungsschenkel 7 und dem Mittelstück 10, durch die eine gewünschte federnde Haltekraft auf das Dachblech 3 ausgeübt wird, ist in der Figur 3 übertrieben dargestellt.

Die federnde Vorspannung ist auf einfache Weise, beispielsweise mittels eines gewöhnlichen Schraubendrehers 20, so aufzubringen, wie dies in der Figur 1 angedeutet ist. Der Schraubendreher 20 wird durch die Öffnung 15 des Rastschenkels 11 gesteckt und stützt sich mit seiner Klinge in einer Öffnung 23 des Profilelementes 1 (entsprechend dem Profilelement 18 in der Figur 3) ab. Durch eine Schwenkbewegung in Richtung des Pfeiles 21 wird der Rastschenkel 11 herabgezogen, bis die Rastnasen 14 hinter die Kante 22 greifen können. In sinngemäß der gleichen Weise lassen sich die Halteklammern 6 auch wieder lösen, um das Dachblech 3 abzunehmen.

In der Figur 4 ist ein weiteres Beispiel einer Halteklammer gezeigt. Mehrere Halteklammern 25 mit Öffnungen 26 sind Bestandteil einer Halteleiste 27, die winkelförmig ausgebildet ist und einen unteren Schenkel 30 sowie einen oberen Schenkel 31 mit einer stumpfwinkligen Abkantung 32 besitzt. Die Halteklammern 25 sind durch Einschnitte in dem Schenkel 30 gebildet. Öffnungen 33 des oberen Schenkels 31 dienen zur Befestigung der Leiste 27 an dem Dachblech 3 (Figur 3). Die Leiste 27 hat außer der Funktion, mehrere Halteklammern 25 zusammenzufassen noch die Aufgabe, einen zwischen dem Dachblech 3 und dem Gerüst des Schaltschrankes 16 evtl. bestehenden Spalt gegen ein Hindurchtreten einer elektromagnetischen Strahlung abzudichten. Dies kann erwünscht sein, um die Funktion empfindlicher elektronischer Geräte im Inneren des Schaltschrankes 16 auch beim Vorhandensein störender elektromagnetischer Strahlung sicherzustellen.

## Patentansprüche

1. Schaltschrank (16) mit einem durch Wandelemente (3, 17) und Türen abdeckbaren Gerüst aus Hohlprofilelementen (1) mit wenigstens einem an der Innenseite des Schaltschrankes (16) zugänglichen, Befestigungselemente für die Wandelemente (3, 17) aufnehmenden Steg (4), **gekennzeichnet durch** folgende Merkmale:
   - wenigstens eines der Wandelemente (3) ist mit mehreren Halteklammern (6) versehen, die jeweils mit einem federnden Schenkel (11) in Eingriff mit einer Kante (22) des Steges (4) des Hohlprofilelementes (1) unter Aufbringung einer das Wandelement (3) gegen das Hohlprofilelement (1) vorspannenden Kraft bringbar sind,
   - die Halteklammer (6) besitzt einen zur Verbindung mit dem Wandelement (3) vorgesehenen Befestigungsschenkel (7) und einen winklig von diesem abragenden und mit einer Rastnase (14) versehenen Rastschenkel (11),
   - der Rastschenkel (11) ist mit einer Öffnung (15) für den Angriff eines Werkzeuges (20) versehen.

2. Schaltschrank nach Anspruch 1, **dadurch gekennzeichnet,** daß zwischen dem Befestigungsschenkel (7) und dem Rastschenkel (11) unter Bildung einer Biegezone (8) ein Mittelstück (10) angeordnet ist.

3. Schaltschrank nach Anspruch 2, **dadurch gekennzeichnet,** daß die Biegezone als kreisbogenförmiger Abschnitt (8) mit einem gegenüber dem Abstand des Befestigungsschenkels (7) von dem Mittelstück (10) größeren Durchmesser ausgebildet ist.

4. Schaltschrank nach Anspruch 1, **dadurch gekennzeichnet,** daß der Rastschenkel (11) im Querschnitt U-förmig gestaltet und über die Kante (22) des Steges (4) des Hohlprofilelementes (1) überstehend bemessen ist und daß zwei Rastnasen (14) durch Einschnitte (13) der Randschenkel (12) des Rastschenkels (11) gebildet sind.

5. Schaltschrank nach einem der vorangehenden Ansprüche, **dadurch gekennzeichnet,** daß die Kante (22) durch einen Endsteg (4) eines zur Innenseite des Schaltschrankes (16) offenen C-Hohlprofilelementes (1) gebildet ist.

6. Schaltschrank nach Anspruch 1, **dadurch gekennzeichnet,** daß wenigstens zwei Halteklammern (25) durch eine Leiste (27) verbunden sind.

7. Schaltschrank nach Anspruch 6, **dadurch gekennzeichnet,** daß die Leiste (27) im Profil winkelförmig gestaltet und die Halteklammern (25) durch einschnitte aus dem einen Schenkel (30) der Leiste (27) gebildet sind.

8. Schaltschrank nach Anspruch 7, **dadurch gekennzeichnet,** daß ein zu dem Wandelement (3) paralleler Schenkel (31) der Leiste (27) mit Öffnungen (33) zur Befestigung der Leiste (27) an dem Wandelement (3) und dieser Schenkel (31) an seinem Rand mit einer stumpfwinkligen Abkantung (32) versehen ist.

FIG 1

FIG 2

FIG 3

FIG 4